# EUROPEAN PATENT APPLICATION

(11) **EP 3 509 131 A1**
(43) Date of publication of application: **10.07.2019**
(21) Application number: 18150590.0
(22) Date of filing: 08.01.2018
(51) Int. Cl.: H01M 2/10, H01M 10/42, H01M 10/625, H01M 10/647, H01M 10/655, H01M 10/613, H01M 2/20

(54) **SWITCHABLE BATTERY MODULE**

(71) Applicant: Samsung SDI Co., Ltd., Yongin-si, Gyeonggi-do 17084 (KR)
(72) Inventor: Kurcik, Peter, 8505 St. Nikolai im Sausal (AT); Hofer, Maximilian, 8230 Hartberg (AT); Hammerschmied, Helmut, 8020 Graz (AT); Pretschuh, Markus, 8020 Graz (AT)
(74) Representative: Gulde & Partner

(57) **Abstract**

The present invention refers to a switchable battery module (100) and more specifically to a battery module (100) comprising a stacked plurality of battery cells (10) and a solid state switch (200), the solid state switch (200) adapted to provide a switchable connection of the battery module (100) with an external power grid, wherein the solid state switch (200) comprises a switch circuit board (210) having at least one power MOSFET (212) to provide a power stage for switching, a back cover (220) and a front cover (224), the back cover (220) and the front cover (224) are forming a housing of the solid state switch (200) which has the same form factor as the individual battery cells (10) of a battery module (100). For example, the solid state switch (200) may comprise a housing which is identical to a case (26) of a conventional battery cell (10). The solid state switch (200) can thus be arranged as a fully-integrated additional element in the stack of battery cells (10).

## Description

### Field of the Invention

The present invention relates to a switchable battery module and more specifically to a battery module including a solid state switch. The present invention is further related to a battery comprising such switchable battery module.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs each battery is coupled to a common current collector structure and a common battery management system and the unit thereof is housed. In modular designs, pluralities of battery cells are connected to form submodules and several submodules are connected to form the module. The battery management functions can then be at least partially realized on either module or submodule level and thus interchangeability might be improved. One or more battery modules are mechanically and electrically integrated, equipped with a thermal management system and set up for communication with one or more electrical consumers in order to form a battery system.

To connect/disconnect the battery module from an external power grid (e.g. a battery system power grid or a vehicle power grid), electromechanical switches (relays) are typically used for a switching circuit. However, switching circuits based on electromechanical switches have several disadvantages and requires additional efforts during the production of a battery system. A relay-based electromechanical switch consumes always current when the relay is switched on, which causes continuous power consumption. The mechanical parts of a relay are failure-prone and provide only a limited lifetime, i.e. the number of switching cycles of a relay is limited. Furthermore, the mechanical switching times are limited due to inertia.

There are certain efforts to use power MOSFETs (Metal Oxide Semiconductor Field Effect Transistors) for solid state switches on a circuit board of a battery module. However, due to the high currents and resistances of the switch, power dissipation is a problem for using MOSFET-based solid state switches. Especially for high currents there is a special need for efficiently cooling this kind of solid state switches. The common approach to cool the main part of solid state switches in batteries, i.e. the switchable MOSFETs, is to use an aluminum heat sink which is thermally connected to the surface of the MOSFETs (e.g. the surface of the individual MOSFET packages). The switch circuit board including the power MOSFETs is then typically connected to a thermal heatsink. For adequate heat transfer from the MOSFETs to the heat sink, thermal interface material has to be used. A major disadvantage of this approach is that the cooling of the solid state switch is independent from the thermal management system used for cooling the individual battery cells in a battery module. Connecting the heat sink to the solid state switch led to additional expenses in the production of battery modules (e.g. costs, installation space).

For providing thermal control of a battery system, a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/dissipating heat from the cells is required. For high performance batteries, active cooling systems are mandatory. Common approaches are to use active liquid cooled system or active air cooled system. For low performance batteries passive cooling may be sufficient.

It is thus an object of the present invention to overcome or reduce at least some of the drawbacks of the prior art and to provide a battery module including a solid state switch which avoids the requirement of different cooling systems in a battery module while additional expenses in the production of the battery modules are reduced.

### Summary of Invention

One or more of the drawbacks of the prior art could be avoided or at least reduced by means of the present invention. In particular, a battery module is provided comprising:
- a plurality of battery cells, wherein each of the battery cells comprises a case and a cap assembly for capping the case, wherein the cap assembly includes a positive terminal and a negative terminal, the case of each battery cell comprises two lateral walls, the entire lateral walls in the plurality of battery cells having uniform size and shape, wherein the battery cells are arranged as a cell stack with adjacent lateral walls forming a row; and
- a solid state switch to switchable connect the battery module with an external power grid, wherein the solid state switch comprises a switch circuit board having at least one power MOSFET to provide a power stage for switching, a back cover and a front cover, the back cover and the front cover are forming a housing of the solid state switch;
wherein the back cover and the front cover having lateral walls in the same size and shape as the lateral walls of the case of each battery cell, and the solid state switch is arranged as an element in the stack of battery cells.

In other words, it is the idea of the present invention to have the solid state switch with the same form factor as a battery cell or a plurality of battery cells, wherein same form factor means that the solid state switch is implemented in a housing that equals at least in two dimensions the used battery cell form factor. Preferably, the two dimensions are related to the width, depth and height of a battery cell, wherein said two dimensions correspond to the parameters with the largest numerical values. Preferably, the front cover and the back cover as well as the lateral wall of each battery cell have a uniform rectangular shape with identical width and height values (i.e. form factor). The remaining dimension, i.e. the thickness of the solid state switch, may be different from the thickness of a battery cell or it may have the same value as for a battery cell. Having the same form factor allows to integrate the solid state switch (i.e. the housing of the solid state switch) into the stack of battery cells (i.e. the stack of the battery cell cases) such that the same holders can be used for fixing the individual elements to form a common battery module.

Having the solid state switch in the same form factor as a battery cell or a plurality of battery cells offers many advantages over conventional techniques for the integration of solid state switches (or solid state switching circuits) into battery modules. As the solid state switch is arranged as an additional element in the stack of battery cells, the cooling system of the battery cells can be uses for the solid state switch. The same cooling performance can be achieved as for the battery cells, which improves the typical cooling of solid state switches. Additional efforts to cool the MOSFETs of a solid state switch independent from the battery module can thus be avoided. Furthermore, the solid state switch as an additional element in the stack of battery cells can be easily implemented anywhere in the cell stack. This relaxes the build-in situation as the solid state switch and the corresponding heat sink do not require additional installation space in the battery module outside the battery cell stack. The solid state switch is instead arranged with the battery cells in a common installation space.

Preferably, the solid state switch is arranged as an element at the end of the battery cell stack. However, the solid state switch can be arranged anywhere on the battery cell stack. It would also be possible to have more than one solid state switch arranged at different positions within a stack of battery cells for distributing the thermal load within the cell stack.

Preferably, the maximum power dissipation of the solid state switch is between 75% and 125% of the average power dissipation per cell of the plurality of battery cells. Preferably, average values are arithmetic average values. Solid state switches for batteries have usually an electric resistance of around 1mΩ. Therefore, power dissipation of P = I²·R is generated. Typical values for power dissipation are 2.5W at 50A, 10W at 100A, 40W at 200A and 250W at 500A. The battery cells or some cells in parallel have typically a comparable electrical resistance of 1mΩ. With the preferred condition that the maximum power dissipation of the solid state switch is between 75% and 125% of the average power dissipation per cell of the plurality of battery cells, it is ensured that the maximum power dissipation of the solid state switch and the average power dissipation per cell of the plurality of battery cells are roughly within the same range. Being in the same range is important to avoid thermal energy being transferred between the battery cells and the solid state switch. If one of the elements has much higher power dissipation than the other, the thermal imbalance would require an improved cooling to equalize the different thermal potentials. More preferably, the maximum power dissipation of the solid state switch is between 85% and 115% of the average power dissipation per cell of the plurality of battery cells. Even more preferred are ranges between 90% and 110%, between 95% and 105% and between 99% and 101%.

Preferably, the average power dissipation per MOSFET in a group of parallel switched power MOSFETs of the solid state switch times the number of parallel switched power MOSFETs is between 75% and 125% of the average power dissipation per cell of the plurality of battery cells. Preferably, average values are arithmetic average values. Nearly all of the heat dissipation in a solid state switch is caused by the thermal power loss of the power MOSFETs. The power dissipation P = I²·R highly depends on the electrical current which is switched by the MOSFETs. Power dissipation can be reduced by distributing the electrical current over more than one MOSFET. A typical solid state switch thus comprises multiple power MOSFETs, which are preferably electrically connected in parallel to keep the electrical current through a single power MOSFET at a low value. For the design of a solid state switch of the present invention this means that there exists a configuration with a number of parallel MOSFETs in which nearly the same cooling energy is needed for a battery cells (or the totality of battery cells) and the plurality of MOSFETs in the solid state switch. The resulting on-resistance then strongly depends on the number of power MOSFETs which are switched in parallel. For example, with a typical antiserial back-to-back configuration with 5 MOSFETs in parallel each side, an overall on-resistance of around 800µΩ can be achieved. More preferably, the average power dissipation per MOSFET in a group of parallel switched power MOSFETs of the solid state switch times the number of parallel switched power MOSFETs is between 85% and 115% of the average power dissipation per cell of the plurality of battery cells. Even more preferred are ranges between 90% and 110%, between 95% and 105% and between 99% and 101%.

Preferably, the solid state switch further comprises a gate driver for driving the gate contact of the power MOSFETs, the gate driver comprising a gate driver board which is different from the switch circuit board. The gate driver board can be integrated within the housing of the solid state switch or it can be located outside the housing of the solid state switch (e.g. next to, attached to, or even as a part of a cell supervisory circuit (CSC)).

Preferably, the power MOSFETs are in thermal contact with the back cover and/or the front cover of the solid state switch. This means that the power MOSFETs (e.g. a surface of the package of the MOSFETs) are at least partly thermally connected to the housing of the solid state switch. The thermal power loss of the MOSFETs is thus transferred to the outside of the solid state switch, where it can be cooled by the same cooling system which is used for cooling the battery cells in a battery module. Another option to cool the power MOSFETs may be a thermal connection to a liquid cooling system wherein the coolant is channeled through the solid state switch. In this case, a thermal contact between the power MOSFETs and the back cover and/or the front cover of the solid state switch may not be required.

In a preferred embodiment, the housing of the solid state switch is identical to a case of a battery cell. In other words, the front cover and the back cover may form a unibody which is identical to the case (cell can) of a battery cell in the plurality of battery cells.

Moreover, it is preferred that the switch circuit board may be housed by a full case (including a corresponding cap assembly) which is also used for the case of the battery cells (so-called "switch in a cell can"). This embodiment has the advantage that not only the form factor is the same as for the battery cells, but also the electrical connections are simplified compared to the prior art as the same connection techniques for both elements can be applied during module assembling processes. This includes both, high current power connections and low current control connections of the solid state switch. In particular, the low current control connections (e.g. for connecting a gate driver to the MOSFETs) may be connect to an external circuit board via conventional wire bonding.

In another preferred embodiment, the back cover and/or the front cover are formed as a metal block. For example, the metal block may function as an additional heat sink for enlarging the surface for cooling and/or it is applied as a spacer layer to accommodate for varying requirements in the available installation space in different types of battery modules.

Preferably, the solid state switch comprises means to connect for electrically connecting the switch circuit board with a battery management system and/or a gate driver board and/or a cell supervisory circuit (i.e. low current connections). For example, these means to electrically connect can be a connector, a bonding pad for wire bonding or a ribbon cable.

Preferably, the solid state switch comprises a first terminal and a second terminal, both terminals adapted for electrically connecting an external power grid to the plurality of battery cells via the switchable power MOSFETs (i.e. high current connections). The first terminal and a second terminal may be identically formed and arranged like a first terminal and a second terminal of battery cells of the plurality of battery cells. However, the form and arrangement of the terminals of the solid state switch could differ from the form and arrangement of the terminals of battery cells.

Preferably, the plurality of battery cells and the solid state switch are connected in series by busbars via corresponding terminals of the plurality of battery cells and at least one terminal of the solid state switch. Using busbars for interconnecting the individual battery cells of a battery module is well known in the prior art, however, using the same busbars also for connecting the solid state switch to the battery cells allows to reduce the manufacturing costs for cheaper electrical connection of solid state switches. Other types of high current connections (such as high-current cables) are not required during assembling.

Preferably, the solid state switch comprises an even number of power MOSFETs, each two of the MOSFETs are antiserial connected drain-to-drain or source-to-source. An antiserial connection of power MOSFETs is typically used for solid states switches and allows a simple and effective circuit design. This type of connection is preferred as it allows an easy adaption of the heat dissipation to the required amount of heat dissipation in various kinds of battery modules (e.g. 48V battery modules with different capacities).

Preferably, the surfaces of all (or at least some) of the power MOSFETs on the switch circuit board are thermally connected by a heat spreader, e.g. copper inlays or overlays. A heat spreader is a kind of heat exchanger which can be used to equalize heat between multiple heat sources. By connecting preferably all MOSFETs (e.g. the surface of the individual MOSFET packages) by a common heat spreader, the connection to a cooling system may be simplified and local hotspots in the electronics can be avoided. The goal is to provide equal thermal connection to all of the MOSFETs, otherwise it can lead to overheat and failure of the MOSFETs with weaker cooling.

Preferably, at least one thermally conductive surface of the switch circuit board is thermally connected to the back cover and/or the front cover. Therefore, the switch circuit board may comprise thermally conductive regions. Such regions may be regions with locally increased thermal conductivity. They may be provided by applying an additional metallization on a surface of the switch circuit board, which has no electrical function but allows transferring heat from the MOSFETs to the covers. The switch circuit board could also be made of a thermal conductive material such that the heat can be dissipated thru the switch circuit board.

Preferably, the plurality of battery cells and the solid state switch are cooled by a common heat exchange member. The heat exchange member may be part of the battery module cooling system. Modifications to a conventional heat exchange member are not required as the common form factor of the solid state switch and the battery cells in the battery module allows the same cooling techniques to be applied on both elements. For example, the heat exchange member of a liquid cooling system may be a heat sink with a plurality of inner channels for channeling the coolant through the heat exchange member. Therefore, the heat exchange member has to be in good thermal contact to the individual heat sources, i.e. the battery cells and the solid state switch.

According to another aspect of the present invention, a battery including a battery module as defined above is provided

According to yet another aspect of the present invention, a vehicle including a battery module as defined above is provided.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic perspective view of a standard battery cell;
- Fig. 2: illustrates a perspective view of a conventional battery module;
- Fig. 3: illustrates a simplified schematic block diagram of a battery module;
- Fig. 4: illustrates a schematic perspective view of a solid state switch according to an embodiment;
- Fig. 5: illustrates a schematic perspective view of a battery module according to an embodiment; and
- Fig. 6: illustrates a schematic perspective view of a battery module according to an embodiment including a battery management system board.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

In the drawings, the sizes of elements may be exaggerated for clarity. For example, in the drawings, the size or thickness of each element may be arbitrarily shown for illustrative purposes, and thus the embodiments of the present invention should not be construed as being limited thereto.

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present invention.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g. rotated 90 degrees or at other orientations) and the spatially relative descriptors used herein should be interpreted accordingly.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense.

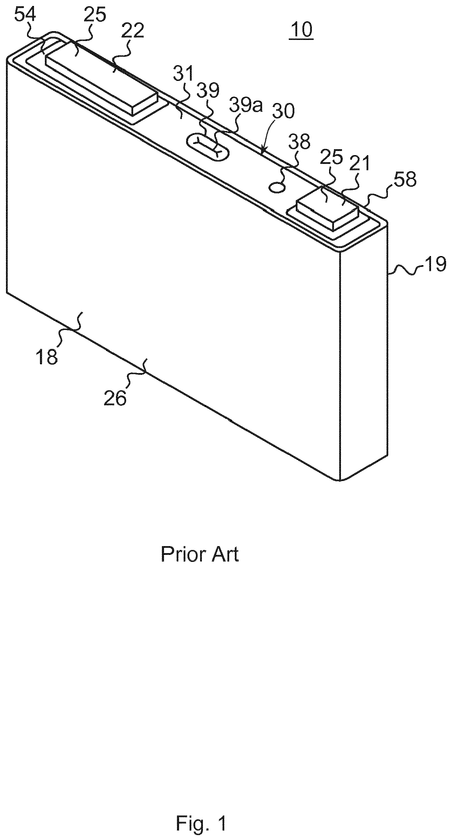

Figure 1 illustrates a schematic perspective view of a standard battery cell 10. The battery cell 10 may include an electrode assembly, and a case 26 for accommodating an electrode assembly. The battery cell 10 may also include a cap assembly 30 for sealing an opening of the case 26. The battery cell 10 will be described as a non-limiting example of a lithium ion secondary battery configured to have a prismatic (or rectangular) shape.

The case 26 may include a bottom surface having a substantially rectangular shape, and may include a pair of first lateral walls, that are the wide side surfaces 18, 19, and a pair of second lateral walls, that are narrow side surfaces, connected vertically to end portions of the bottom surface, respectively, to form a space for accommodating the electrode assembly 10. The first lateral walls 18, 19 may face each other, and the second lateral walls may be positioned to face each other and may be connected to the first lateral walls 18, 19. A length of an edge at which the bottom surface and a first lateral wall 18, 19 are connected to each other may be longer than that of an edge at which the bottom surface and the second lateral wall are connected to each other. Preferably, adjacent first and second lateral walls enclose an angle of about 90°.

The cap assembly 30 may include a cap plate 31 for covering the opening of the case 26 by being bonded to the case 26, and may include a positive terminal 21 (first terminal) and a negative terminal 22 (second terminal), which are externally protruded from the cap plate 31 to be electrically connected to a positive electrode and a negative electrode, respectively. The cap plate 31 may be configured to have a shape of a plate that may be extended in one direction, and that may be bonded to the opening of the case 26. The cap plate 31 may include an injection hole and a vent hole that communicate with an interior of the cap assembly 30. The injection hole may be configured to allow the injection of the electrolyte solution, and a sealing cap 38 may be mounted thereon or therein. Further, a vent member 39 including a notch 39a, which may be opened due to a predetermined pressure may be mounted to or in the vent hole.

The positive terminal 21 and the negative terminal 22 may be mounted to protrude upward from the cap plate 31. A terminal connecting member 25 for electrically connecting the positive terminal 21 may be mounted on the positive terminal 21, and a terminal connecting member 25 for electrically connecting the negative terminal 22 may be mounted on the negative terminal 22.

A gasket for sealing may be mounted between the terminal connecting member 25 and the cap plate 31, while being inserted into the hole through which the terminal connecting member 25 may extend. A connecting plate 58 for electrically connecting the positive terminal 21 and the cap plate 31 may be mounted between the positive terminal 21 and the cap plate 31. The terminal connecting member 25 may be inserted into the connecting plate 58. Accordingly, the cap plate 31 and the case 26 may be positively electrified.

An upper insulating member 54 for electrically insulating the negative terminal 22 and the cap plate 31 may be mounted between the negative terminal 22 and the cap plate 31. The terminal connecting member 25 may be inserted into a hole formed at the upper insulating member 54.

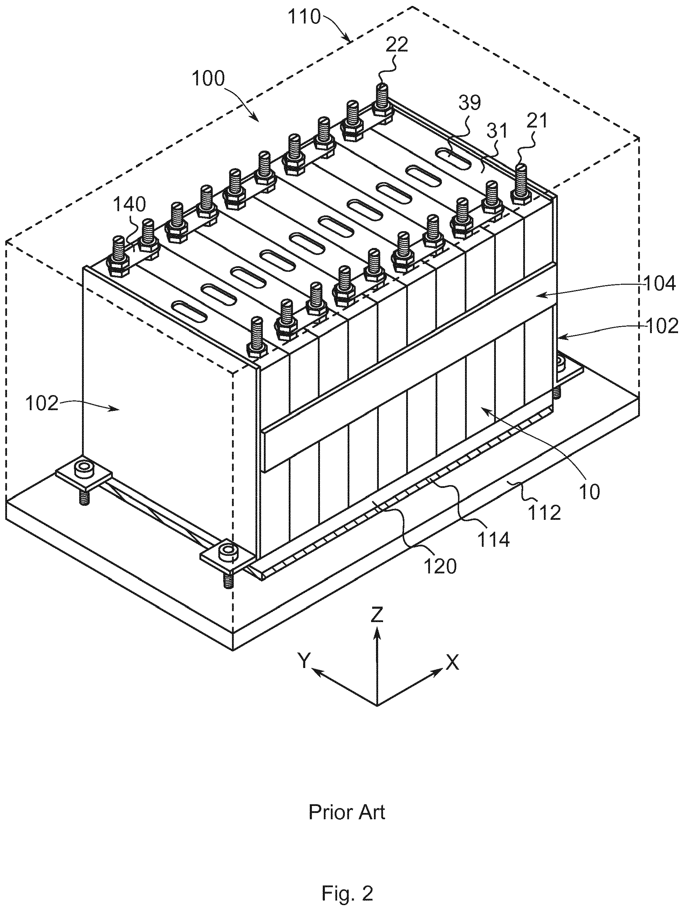

Figure 2 illustrates a perspective view of a conventional battery module 100. The battery module 100 includes a plurality of battery cells 10 aligned in one direction and a heat exchange member 120 provided adjacent to a bottom surface of the plurality of battery cells 10. A pair of end plates 102 are provided to face wide surfaces of the battery cells 10 at the outside of the battery cells 10, and a connection plate 104 is configured to connect the pair of end plates 102 to each other thereby fixing the plurality of battery cells 10 together. Fastening portions on both sides of the battery module 100 are fastened to a support plate 112 by bolts. The support plate 112 is part of a housing 110.

Here, each battery cell 10 is a prismatic (or rectangular) cell, the wide flat surfaces of the cells being stacked together to form the battery module 100. Further, each battery cell 10 includes a battery case 26 configured for accommodation of an electrode assembly and an electrolyte. The battery case 26 is hermetically sealed by a cap plate 31. The cap plate 31 is provided with positive and negative electrode terminals 21 and 22 having different polarities, and a vent member 39. The vent member 39 is a safety means of the battery cell 10, which acts as a passage through which gas generated in the battery cell 10 is exhausted to the outside of the battery cell 10. The positive and negative electrode terminals 21 and 22 of neighboring battery cells 10 are electrically connected through a bus bar 140, and the bus bar 140 may be fixed by a nut or the like. Hence, the battery module 100 may be used as power source unit by electrically connecting the plurality of battery cells 10 as one bundle.

Generally, the battery cells 10 generate a large amount of heat while being charged/discharged. The generated heat is accumulated in the battery cells 10, thereby accelerating the deterioration of the battery cells 10. Therefore, the battery module 100 further includes a heat exchange member 120, which is provided adjacent to the bottom surface of the battery cells 10 so as to cool down the battery cells 10. In addition, an elastic member 114 made of rubber or other elastic materials may be interposed between the support plate 112 and the heat exchange member 120.

The heat exchange member 120 may include a cooling plate provided to have a size corresponding to that of the bottom surface of the plurality of battery cells 10, e.g., the cooling plate may completely overlap the entire bottom surfaces of all the battery cells 10 in the battery module 100. The cooling plate usually includes a passage through which a coolant can move. The coolant performs a heat exchange with the battery cells 10 while circulating inside the heat exchange member 120, i.e. inside the cooling plate.

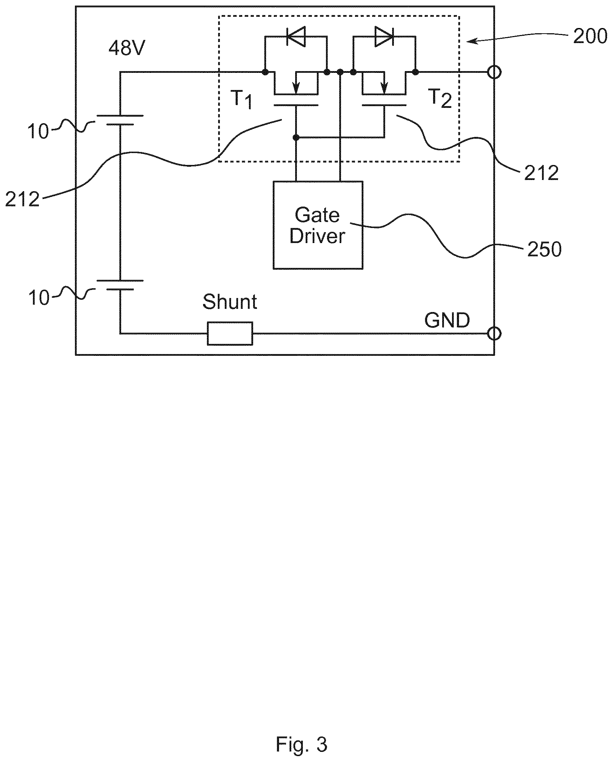

Figure 3 shows a simplified schematic block diagram of a battery module 100, in particular a battery module 100 for a 48V battery system. The battery cells 10 are connected in series to provide electrical power to an external power grid. For switching the power, a solid state switch 200 comprising two antiserial connected power MOSFETs 212 (so-called back-to-back configuration) is integrated in one arm of the circuit. The schematic further shows a gate driver for driving the gate contact of the power MOSFETs 212. The dashed line indicates a specific embodiment, in which the gate driver 250 is placed outside the solid state switch 200, e.g. as part of a cell supervisory circuit (CSC) or a battery management system (BMS). Each of the two shown MOSFETs may be representative for a plurality of parallel MOSFETs.

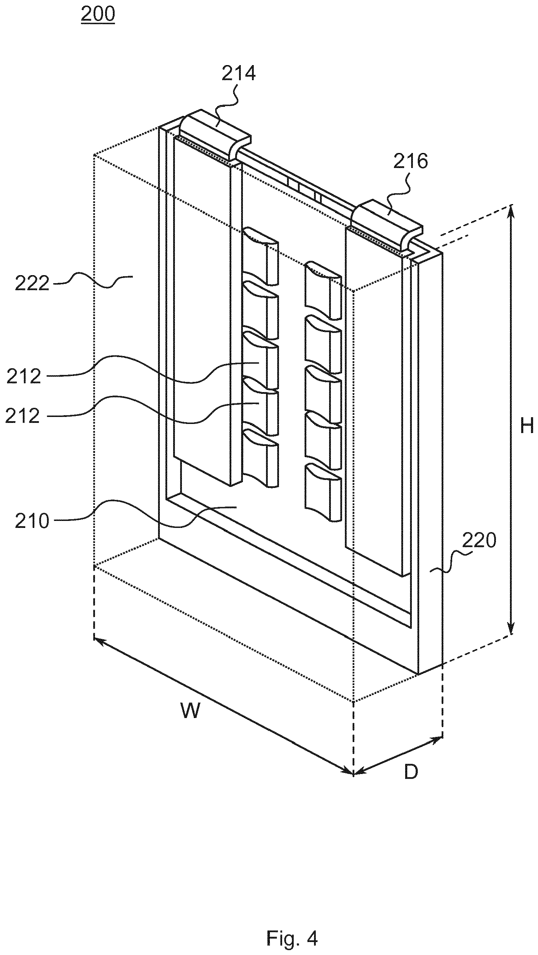

Figure 4 shows a schematic perspective view of a solid state switch 200 according to an embodiment. The solid state switch 200 comprises a switch circuit board 210 having a plurality of power MOSFETs 212 to provide a power stage for switching, a back cover 220, preferably for holding the switch circuit board 210, and a front cover 224 in the form of a metal block 222. The back cover 220 and the metal block 222 are forming a housing of the solid state switch 200. The back cover 220 and the front cover 224 (i.e. metal block 222) may have lateral walls in the same size and shape as the lateral walls 18, 19 of a case 26 of each battery cell 10 (cf. Fig. 1). The solid state switch, i.e. the housing of the solid state switch, has a prismatic (or rectangular) shape which is defined by the three dimensional values width W, depth D (or thickness), and height H. The form factor of the solid state switch may thus be defined by a width W and a height H, which are identical with the width W and height H of a battery cell 10 for a battery module 100 of the present invention. The solid state switch can thus be used with different population (i.e. different numbers of MOSFETs) in various battery modules 100 which use battery cells 10 with the same form factor. For example, the solid state switch 200 may be used for 48V batteries with different capacities. The used battery cells 10 may have the same form factor, e.g. same width W and height H of their cases 26, but they could differ in the depth D (or thickness) of the cases 26. The solid state switch can thus be applied to different battery cell 10 formats. The figure also shows a first terminal 214 and a second terminal 216.

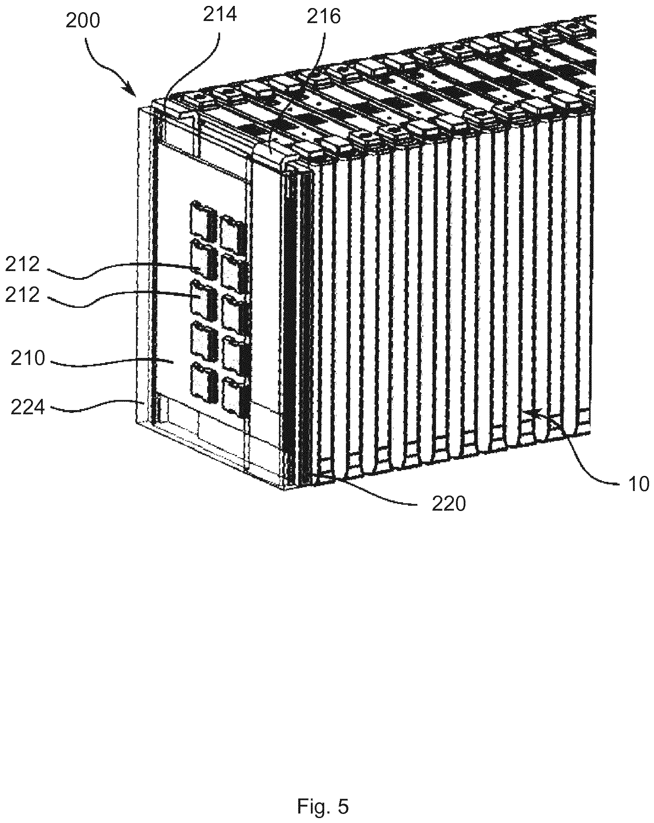

Figure 5 shows a schematic perspective view of a battery module 100 according to an embodiment. The integrated solid state switch 200 basically corresponds to the solid state switch 200 shown in Fig. 4. Thus, reference is made to Fig. 3 regarding the reference numbers and their assignment. However, in the schematic the front cover 224 is similar to the back cover 220. The housing of the solid state switch 200 may thus be identical to a case 26 of a battery cell 10.

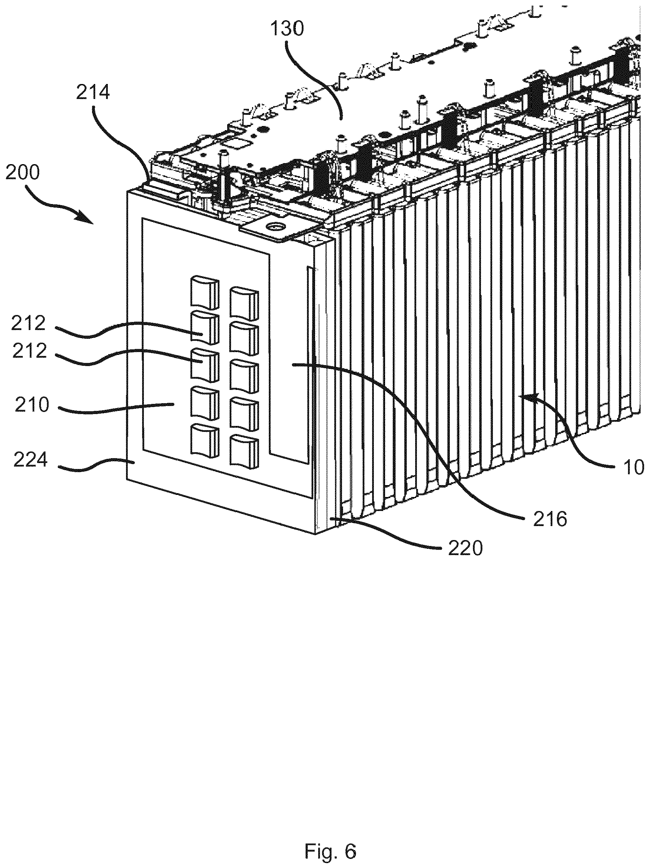

Figure 6 shows a schematic perspective view of a battery module 100 according to an embodiment including a battery management system board 130. The battery module 100 basically corresponds to the battery module 100 (battery cell 10 stack including a solid state switch 200) shown in Fig. 5. Thus, reference is made to Fig. 5 regarding the reference numbers and their assignment. However, for 48V batteries the common approach is to have a battery management system board 130 situated on top of the cell stack which is shown here only for illustrational purposes.

## Claims

1. A battery module (100), comprising:
- a plurality of battery cells (10), wherein each of the battery cells (10) comprises a case (26) and a cap assembly (30) for capping the case (26), wherein the cap assembly (30) includes a positive terminal (21) and a negative terminal (22), the case (26) of each battery cell (10) comprises two lateral walls (18, 19), the entire lateral walls (18, 19) in the plurality of battery cells (10) having uniform size and shape, wherein the battery cells (10) are arranged as a cell stack with adjacent lateral walls (18, 19) forming a row; and
- a solid state switch (200) to provide a switchable connection of the battery module (100) with an external power grid, wherein the solid state switch (200) comprises a switch circuit board (210) having at least one power MOSFET (212) to provide a power stage for switching, a back cover (220) and a front cover (224), the back cover (220) and the front cover (224) are forming a housing of the solid state switch (200);
**characterized in that**
the back cover (220) and the front cover (224) having lateral walls in the same size and shape as the lateral walls (18, 19) of the case (26) of each battery cell (10), and the solid state switch (200) is arranged as an element in the stack of battery cells (10).

2. The battery module (100) of claim 1, wherein the maximum power dissipation of the solid state switch (200) is between 75% and 125% of the average power dissipation per cell (10) of the plurality of battery cells (10).

3. The battery module (100) according to claim 1 or 2, wherein the average power dissipation per MOSFET (212) in a group of parallel switched power MOSFETs (212) of the solid state switch (200) times the number of parallel switched power MOSFETs (212) is between 75% and 125% of the average power dissipation per cell (10) of the plurality of battery cells (10).

4. The battery module (100) according to one of the preceding claims, further comprising a gate driver for driving the gate contact of the power MOSFETs (212), the gate driver comprising a gate driver board (250) which is different from the switch circuit board (210).

5. The battery module (100) according to one of the preceding claims, wherein the power MOSFETs (212) are in thermal contact with the back cover (220) and/or the front cover (224).

6. The battery module (100) according to one of the preceding claims, wherein the housing of the solid state switch (200) is identical to a case (26) of a battery cell (10).

7. The battery module (100) according to one of the claims 1 to 6, wherein the back cover (220) and/or the front cover (224) are formed as a metal block.

8. The battery module (100) according to one of the preceding claims, wherein the solid state switch (200) comprises means to electrically connect the switch circuit board (210) with a battery management system and/or a gate driver board and/or a cell supervisory circuit.

9. The battery module (100) according to one of the preceding claims, wherein the solid state switch (200) comprises a first terminal (214) and a second terminal (216), both terminals (214, 216) adapted for electrically connecting an external power grid to the plurality of battery cells (10) via the switchable power MOSFETs (212).

10. The battery module (100) according to claim 9, wherein the plurality of battery cells (10) and the solid state switch (200) are connected in series by busbars (140) via corresponding terminals (21, 22) of the plurality of battery cells (10) and at least one terminal (214, 216) of the solid state switch (200).

11. The battery module (100) according to one of the preceding claims, wherein the solid state switch (200) comprises an even number of power MOSFETs (212), each two of the MOSFET (212) are antiserial connected drain-to-drain or source-to-source.

12. The battery module (100) according to one of the preceding claims, wherein the surfaces of all of the power MOSFETs (212) on the switch circuit board (210) are thermally connected by a heat spreader and/or wherein a thermally conductive surface of the switch circuit board (210) is thermally connected to the back cover (220) and/or the front cover (224).

13. The battery module (100) according to one of the preceding claims, wherein the plurality of battery cells (10) and the solid state switch (200) are cooled by a common heat exchange member (120).

14. A battery including a battery module (100) according to one of the preceding claims.

15. A vehicle including a battery module (100) according to one of the preceding claims.

## Amended claims

### Amended claims in accordance with Rule 137(2) EPC.

1. A battery module (100), comprising:
- a plurality of battery cells (10), wherein each of the battery cells (10) comprises a case (26) and a cap assembly (30) for capping the case (26), wherein the cap assembly (30) includes a positive terminal (21) and a negative terminal (22), the case (26) of each battery cell (10) comprises two lateral walls (18, 19), the entire lateral walls (18, 19) in the plurality of battery cells (10) having uniform size and shape, wherein the battery cells (10) are arranged as a cell stack with adjacent lateral walls (18, 19) forming a row; and
- a solid state switch (200) to provide a switchable connection of the battery module (100) with an external power grid, wherein the solid state switch (200) comprises a switch circuit board (210) having at least one power MOSFET (212) to provide a power stage for switching, a back cover (220) and a front cover (224), the back cover (220) and the front cover (224) are forming a housing of the solid state switch (200);
wherein the back cover (220) and the front cover (224) have lateral walls in the same size and shape as the lateral walls (18, 19) of the case (26) of each battery cell (10), and the solid state switch (200) is arranged as an element in the stack of battery cells (10),
**characterized in that** the solid state switch (200) comprises a first terminal (214) and a second terminal (216), both terminals (214, 216) adapted for electrically connecting an external power grid to the plurality of battery cells (10) via the switchable power MOSFETs (212) and
wherein the plurality of battery cells (10) and the solid state switch (200) are connected in series by busbars (140) via corresponding terminals (21, 22) of the plurality of battery cells (10) and at least one terminal (214, 216) of the solid state switch (200).

2. The battery module (100) according to one of the preceding claims, further comprising a gate driver for driving the gate contact of the power MOSFETs (212), the gate driver comprising a gate driver board (250) which is different from the switch circuit board (210).

3. The battery module (100) according to one of the preceding claims, wherein the power MOSFETs (212) are in thermal contact with the back cover (220) and/or the front cover (224).

4. The battery module (100) according to one of the preceding claims, wherein the housing of the solid state switch (200) is identical to a case (26) of a battery cell (10).

5. The battery module (100) according to one of the preceding claims, wherein the back cover (220) and/or the front cover (224) are formed as a metal block.

6. The battery module (100) according to one of the preceding claims, wherein the solid state switch (200) comprises means to electrically connect the switch circuit board (210) with a battery management system and/or a gate driver board and/or a cell supervisory circuit.

7. The battery module (100) according to one of the preceding claims, wherein the solid state switch (200) comprises an even number of power MOSFETs (212), each two of the MOSFET (212) are antiserial connected drain-to-drain or source-to-source.

8. The battery module (100) according to one of the preceding claims, wherein the surfaces of all of the power MOSFETs (212) on the switch circuit board (210) are thermally connected by a heat spreader and/or wherein a thermally conductive surface of the switch circuit board (210) is thermally connected to the back cover (220) and/or the front cover (224).

9. The battery module (100) according to one of the preceding claims, wherein the plurality of battery cells (10) and the solid state switch (200) are cooled by a common heat exchange member (120).

10. A battery including a battery module (100) according to one of the preceding claims.

11. A vehicle including a battery module (100) according to one of the preceding claims.
